# EUROPEAN PATENT SPECIFICATION

(11) **EP 2 989 880 B1**
(45) Date of publication and mention of the grant of the patent: **22.09.2021**
(21) Application number: 15180576.9
(22) Date of filing: 11.08.2015
(51) Int. Cl.: A01D 34/74

(54) **CUTTING DECK HEIGHT ADJUSTMENT ASSEMBLY**
ANORDNUNG ZUR MÄHWERKHÖHENEINSTELLUNG
ENSEMBLE DE RÉGLAGE DE LA HAUTEUR DE CHÂSSIS DE COUPE

(30) Priority: 25.08.2014 US 201462041382 P
(43) Date of publication of application: 02.03.2016
(73) Proprietor: Husqvarna AB, 561 82 Huskvarna (SE)
(72) Inventor: Axelsson, Mats, 55466 Jönköping (SE); Bengtzohn, Johan, 56030 Tenhult (SE); Hansson, Robin, 56192 Huskvarna (SE)
(74) Representative: Schröer, Gernot H.

(56) References cited:
- WO-A1-2013/135267
- US-A- 4 320 616
- None

## Description

### TECHNICAL FIELD

The present invention relates to a cutting deck with height adjustment assembly for a lawn mower. More specifically, embodiments relate to an assembly configured to adjust the height of a rear portion of a cutting deck independently of the height of a front portion of the cutting deck.

### BACKGROUND

Lawn care tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines, and are relatively inexpensive. Meanwhile, at the other end of the spectrum, riding lawn mowers, such as lawn tractors, can be quite large and typically have larger engines. Riding lawn mowers can sometimes also be configured with various functional accessories (e.g., trailers, tillers, and/or the like) in addition to grass cutting components.

Riding lawn mowers provide the convenience of a riding vehicle as well as a typically larger cutting deck as compared to a walk-behind model. Often times, these larger-sized cutting decks include a conventional height adjustment assembly to improve height control and cut quality. However, many of these height adjustment assemblies require tools and are difficult to use and access. Additionally, many conventional height adjustment assemblies involve small removable parts that can be easily but accidentally misplaced to render those assemblies inoperable. Further, many conventional height adjustment assemblies are not configured to independently adjust individual portions of the cutting deck.
US 4,320,616 describes a lawn mower suspension which suspends the mower beneath a tractor having an endless flexible drive belt received about pulleys on the tractor and the lawn mower. The mower includes a belt tensioning device including a pair of idler sheaves which receive the opposed runs of the drive belt and maintain tension in the belt. The mower is retained at pre-determined heights by a height-adjustment arm, which is secured to a rock shaft. The mower includes a sector plate having a series of generally vertically spaced slots which receive the spring loaded stud.

### BRIEF SUMMARY OF EMBODIMENTS OF THE PRESENT INVENTION

The present invention provides a cutting deck with a height adjustment assembly according to claim 1 and a lawn mower according to claim 14. Further improvements are provided in the dependent claims.

The height adjustment assembly disclosed herein does not require tools to operate, is easy to use and access, does not involve any (or many) small removable parts, and/or is configured to independently adjust individual portions of a cutting deck.

More specifically, the present invention relates to a height adjustment assembly for the cutting deck of a lawn mower, where the cutting deck is configured to be operably coupled to the lawn mower by a mounting assembly, and where the height adjustment assembly includes: (a) a first adjustment plate mounted on the cutting deck and defining a slot therein, where the slot includes a first end and a second end, the first end of the slot being disposed forward of the second end of the slot; (b) a crossbar including a first end rotatably mounted on the cutting deck, the crossbar being configured to be operably coupled to the mounting assembly; and (c) a control rod including a first projection extending outwardly therefrom, the first projection being slidably received in the slot of the first adjustment plate, and a first end of the control rod being pivotably mounted on the crossbar, where (d) in response to the first projection of the control rod being slid within the slot from a first position to a second position, the control rod rotates the crossbar to vertically adjust a portion of the cutting deck.

The present invention also relates to a lawn mower including:
(a) a cutting deck including a height adjustment assembly; and (b) a mounting assembly including at least one lifting arm, where the height adjustment assembly of the cutting deck includes: (i) a first adjustment plate mounted on the cutting deck and defining a slot therein, where the slot includes a first end and a second end, the first end of the slot being disposed forward of the second end of the slot; (ii) a crossbar including a first end rotatably mounted on the cutting deck, the crossbar being operably coupled to the at least one lifting arm of the mounting assembly; and (iii) a control rod including a first projection extending outwardly therefrom, the first projection being slidably received in the slot of the first adjustment plate, and a first end of the control rod being pivotably mounted on the crossbar, where (iv) in response to the first projection of the control rod being slid within the slot from a first position to a second position, the control rod rotates the crossbar to vertically adjust a portion of the cutting deck.

### BRIEF DESCRIPTION OF THE DRAWINGS

Having thus described embodiments of the present invention in general terms, reference will now be made to the accompanying drawings, which are not necessarily drawn to scale, and where:
Figure 1 is a perspective view of a riding lawn mower having a front-mounted cutting deck and a height adjustment assembly for that cutting deck, in accordance with embodiments of the present invention;
Figures 2A and 2B are top perspective views of the cutting deck of the lawn mower shown in Figure 1, showing both the front and rear height adjustment portions of the cutting deck height adjustment assembly;
Figure 3 is a partial perspective view of the cutting deck shown in Figures 2A and 2B, showing the rear height adjustment portion of the cutting deck height adjustment assembly;
Figure 4 is a partial perspective view of the cutting deck shown in Figures 2A and 2B, showing the front height adjustment portion of the cutting deck height adjustment assembly;
Figure 5 is a partial perspective view of the cutting deck shown in Figures 2A and 2B, showing the front height adjustment portion of the cutting deck height adjustment assembly;
Figure 6 is a partial perspective view of the cutting deck shown in Figures 2A and 2B, showing the front height adjustment portion of the cutting deck height adjustment assembly;
Figure 7 is a partial view of the cutting deck of the lawn mower shown in Figure 1, showing a wear plate assembly, in accordance with embodiments of the present invention;
Figure 8 is an exploded, partial perspective view of the wear plate assembly shown in Figure 7; and
Figure 9 is a partial, cross-sectional view of the wear plate assembly shown in Figure 7, taken along line 9-9.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting in scope, applicability, or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Further, although many embodiments of the present invention describe cutting deck height adjustment assemblies operably coupled to a riding lawn mower (e.g., articulating rider, tractor, zero turn lawn mower, etc.), it will be understood that some of these cutting deck height adjustment assemblies may be operably coupled instead to walk behind lawn mowers and/or other types of yard maintenance vehicles.

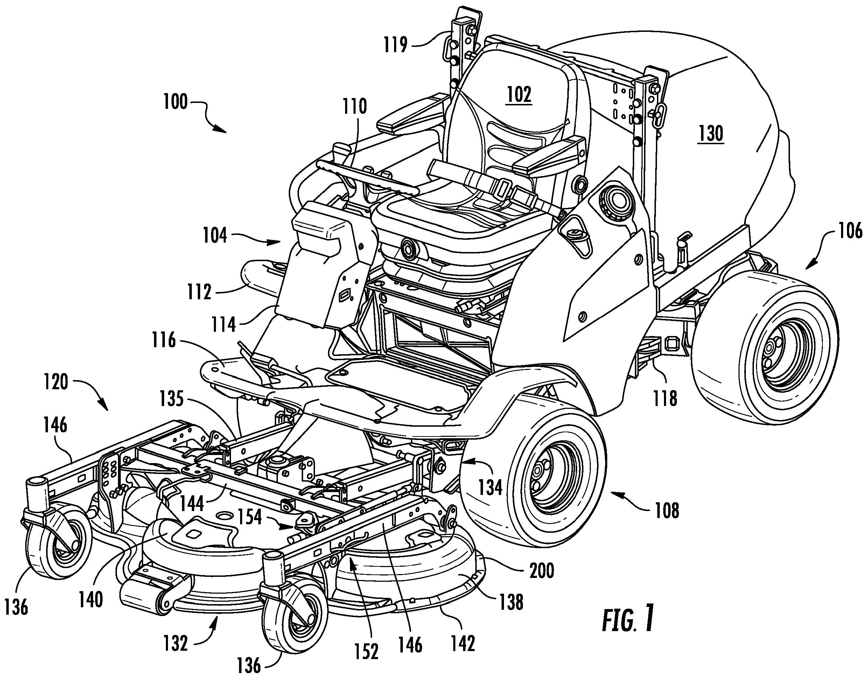

Referring now to the figures, Figure 1 illustrates a perspective view of a riding lawn mower 100 in accordance with an example embodiment of the present invention. As shown, the riding lawn mower 100 includes a seat 102 disposed at the center portion of the riding lawn mower 100. The riding lawn mower 100 also includes a steering assembly 104, which includes a steering wheel 110 for an operator to provide steering input to a pair of rear wheels 106 of the riding lawn mower 100. In alternative embodiments, the front wheels 108 may also receive inputs from the steering assembly 104. Although the steering assembly 104, as shown, includes a steering wheel, in alternative embodiments, handle bars, control levers, etc., may be utilized to provide steering input for the operator.

Additionally, the steering assembly 104 includes a steering column 112 that is operably coupled to additional steering assembly components, described in greater detail below, and extends into a steering console 114. The steering console 114 provides a cover to improve the aesthetic appearance of the riding lawn mower 100 by obscuring the view of various mechanical components associated with the steering assembly 104. The riding lawn mower 100 also includes additional controls-related components such as one or more speed controllers, cutting unit lifting controllers, etc. Some of these controllers may be provided in the form of foot pedals that sit proximate to a footrest 116, which may include a portion on both sides of the steering console 114 to enable the operator to rest his or her feet while seated.

In embodiments, as shown in Figure 1, the riding lawn mower 100 has an articulated frame 118 where the front wheels 108 are rotatably mounted to a front frame portion and the rear wheels 106 are rotatably mounted to a rear frame portion. The rear frame portion and the front frame portion are joined at an articulated joint (not shown). As such, the rear frame portion can pivot with respect to the front frame portion in response to steering input from the steering assembly 104, which reorients the rear wheels 106 with respect to the front wheels 108. Other steering control systems may be employed in some alternative embodiments.

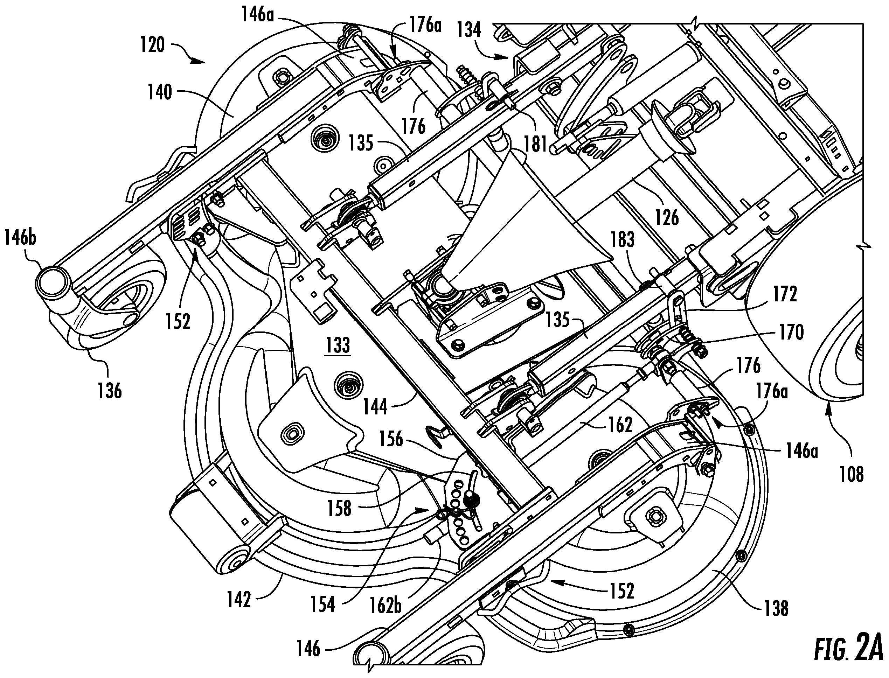

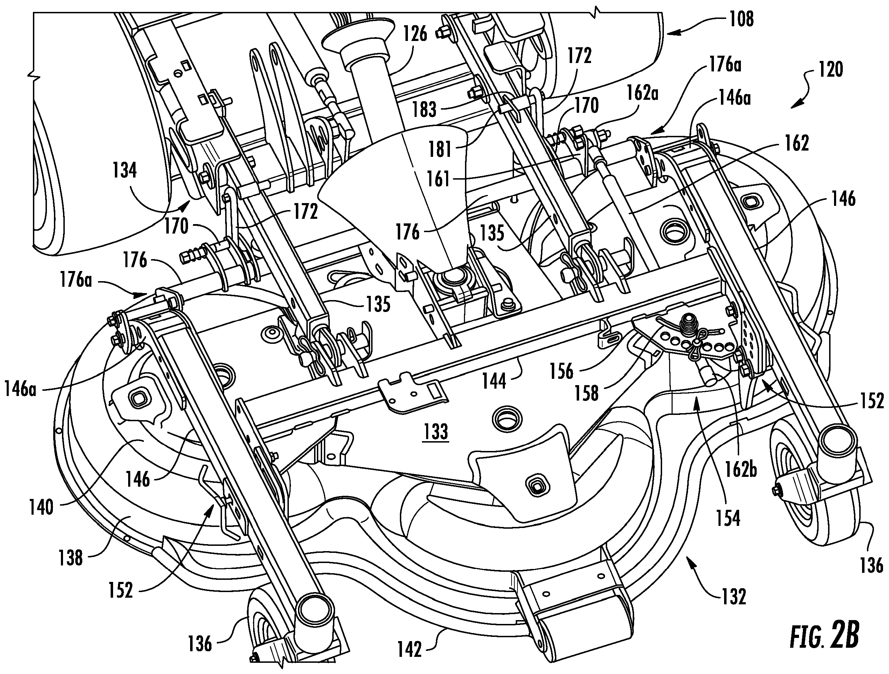

The riding lawn mower 100 is also configured to support the attachment of a cutting deck 120 having at least one cutting blade (not shown) mounted therein. Figures 2A and 2B illustrate a cutting deck 120 according to an example embodiment of the present invention. In embodiments, the cutting deck 120 is a front-mounted cutting deck operably coupled to the riding lawn mower 100 forward of the front wheels 108 of the riding lawn mower 100. In embodiments, the cutting deck 120 is a removable attachment that may be raised from a cutting position, as shown in Figure 1, to a raised position in which it is out of contact with the ground. In this regard, the cutting deck mounting assembly 134, which includes a pair of lifting arms 135, is used to raise and lower the cutting deck 120. Lifting the cutting deck 120 to the raised position enables the riding lawn mower 100 to traverse certain rough terrain or obstacles (e.g., small rocks, curbs, or other features), or may otherwise be preferable for some operators when in a transit mode, i.e., when riding lawn mower 100 is not actively being used in a cutting operation. The raised position also enables operators to clean, service, and/or maintain the cutting deck, including the one or more blades positioned therein.

The cutting deck 120 further includes blade drive components (e.g., drive belts, pulleys, chains, a blade motor, etc.) that rotate the blades of the cutting deck 120 during a cutting operation. Often, as with the present cutting deck 120, blade drive components such as drive belts, pulleys, etc., which transmit the rotational motion of a drive axle 126 to the cutting blades are disposed under a protective cover 133.

Referring again to Figure 1, a drive engine compartment 130 of the riding lawn mower 100 is disposed to the rear of the operator's seat 102 and houses various components, such as a diesel powered engine (not shown), in the present case, or an electric motor, in an alternative embodiment. The diesel powered engine is operably coupled to the rear wheels 106 in order to provide drive power for the riding lawn mower 100. Alternatively, the diesel powered engine may power all four wheels of the riding lawn mower 100 (e.g., in cases where the frame of the riding lawn mower 100 is not articulated). Moreover, in some cases, the diesel powered engine may manually or automatically shift between powering either two wheels or all four wheels of the riding lawn mower 100.

In embodiments, the riding lawn mower 100 includes a roll bar 119 (only the bottom portion of which is shown in Figure 1) that is operably coupled to the frame 118 in the vicinity of the operator's seat 102. The roll bar 119 is configured to protect the operator in the unlikely event of the riding lawn mower 100 rolling over. As previously noted, the frame 118 of the riding lawn mower 100 is articulated such that the front wheels 108 are disposed on the front portion of the frame 118 and the rear wheels 106 are disposed on the rear portion of the frame 118. However, in alternative embodiments, the frame may be a rigid structure.

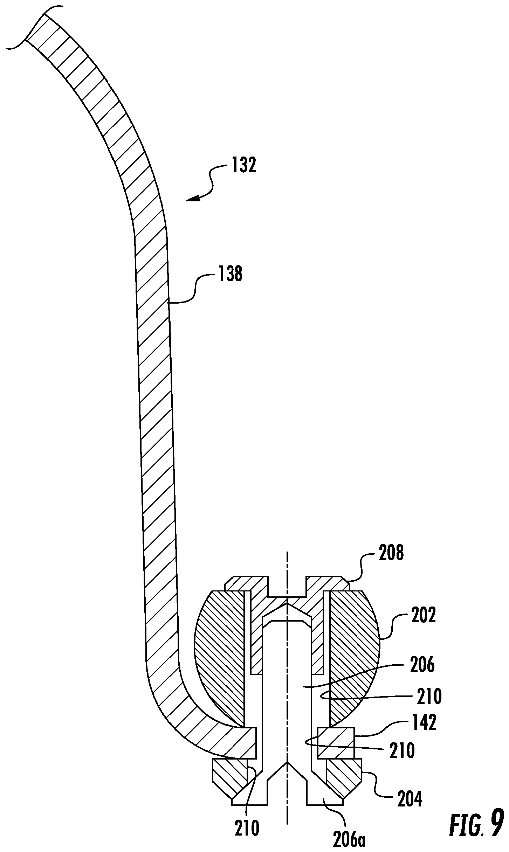

As shown, the cutting deck 120 includes a blade housing 132, beneath which one or more cutting blades (not shown) are disposed. In embodiments, the blade housing 132 of the cutting deck 120 is shaped from a single piece of steel plate and includes a continuous side wall 138 that depends downwardly from a top wall 140 of the blade housing 132 and terminates at its distal periphery with a radially outwardly depending lip 142, as best seen in Figure 9. The cutting blades of the cutting deck 120 turn in response to rotary motive forces applied by, e.g., corresponding drive belts and drive pulleys, which are disposed under the protective cover 133. The protective cover 133 not only shields the drive belts and drive pulleys from inordinate amounts of dust, debris, clippings, etc., but also helps prevent the operator from making inadvertent contact with the operating components. The drive belts and drive pulleys receive rotary motive forces from the drive axle 126, which is driven by the diesel powered engine.

As previously noted, the cutting deck mounting assembly 134 supports (e.g., suspends) the blade housing 132 (and therefore also the cutting blades) relative to (e.g., above) the ground by way of the lifting arms 135. Additionally, to allow for the height of the cutting deck 120 to be adjusted relative to the ground, the riding lawn mower 100 is provided with a cutting deck height adjustment assembly, which includes a front height adjustment assembly 152 and a rear height adjustment assembly 154, both of which may be adjusted independently of each other, as discussed in greater detail below. Specifically, as best seen in Figures 2A and 2B, a distal end of each lifting arm 135 is pivotally mounted on (e.g., secured to) a transverse frame 144. The transverse frame 144 is mounted on (e.g., fixed to) the blade housing 132 and adjustably mounted on (e.g., secured to) a corresponding support arm 146 at each of its ends by the front height adjustment assembly 152. Each support arm 146 is pivotably mounted on (e.g., attached to) the blade housing 132 of the cutting deck 120 at its first, or rear, end 146a. Each support arm 146 also includes a wheel 136 mounted to its second, or front, end 146b. As well, the rear height adjustment assembly 154 adjustably supports (e.g., suspends) the rear portion of the cutting deck 120 from the lifting arms 135. As such, the cutting deck 120 is supported in the desired disposition relative to the ground by both the lifting arms 135 and the wheels 136 of the support arms 146.

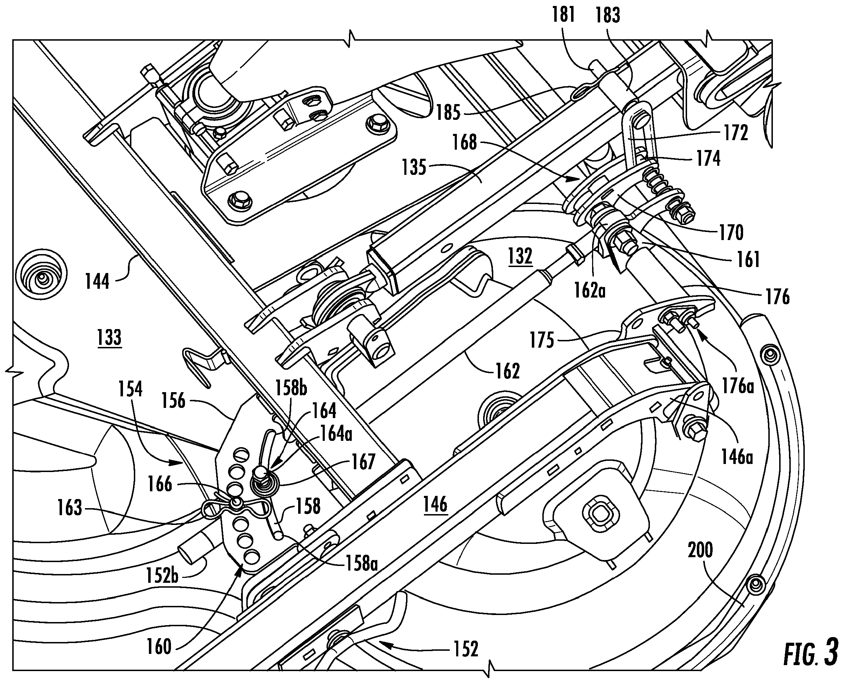

The cutting deck height adjustment assembly includes the front height adjustment assembly 152 and the rear height adjustment assembly 154, which are used to change the cutting height of the cutting blades by adjusting the disposition of the front and the rear of the cutting deck 120, respectively. As best seen in Figure 3, the rear height adjustment assembly 154 includes a rear adjustment plate 156, a crossbar 176, and a control rod 162 that extends between the crossbar 176 and the rear adjustment plate 156. In embodiments, the rear adjustment plate 156 is mounted on (e.g., secured to) the blade housing 132 of the cutting deck 120 by the frame 144. The frame 144 may be mounted on (e.g., fixed to) the blade housing 132 and may extend transversely to a longitudinal center axis of the riding lawn mower 100. In embodiments, the frame 144 also extends generally parallel to the crossbar 176. The rear adjustment plate 156 may be horizontally disposed with respect to the blade housing 132.

Further, the rear adjustment plate 156 may define a slot 158 therein, where the slot 158 includes a first end 158a and a second 158b. In embodiments, as shown in Figure 3, the slot 158 is curved between the first end 158a and the second end 158b. For example, in embodiments, the slot 158 has the shape of an arc, such that the slot 158 bends towards the front portion of the cutting deck 120 as the slot 158 extends from the first end 158a towards the second end 158b. In other embodiments, the slot 158 may take other shapes. Further, in embodiments, the slot 158 is shaped as a straight line between the first end 158a and the second end 158b. Additionally or alternatively, in embodiments, the slot 158 extends continuously from its first end 158a to its second end 158b. Also, the first end 158a may be positioned forward of the second end 158b with respect to the longitudinal center axis of the riding lawn mower 100. For example, the second end 158b may be positioned between the first end 158a and the frame 144. Additionally or alternatively, the second end 158b may be positioned between the first end 158a and the rear portion of the cutting deck 120. The slot 158 is configured to slidably receive a first projection 164 of the control rod 162, as discussed in greater detail below. Additionally, the rear adjustment plate 156 defines a plurality of apertures 160 (e.g., detent apertures) that are disposed adjacent to the slot 158 along its length. In embodiments where the slot 158 is curved and/or has the shape of an arc, the apertures 160 are disposed along the slot 158 in a curve and/or in the shape of an arc. The apertures 160 are configured to selectively receive a second projection 166 of the control rod 162, with each individual aperture 160 corresponding to a selectable cutting height (e.g., vertical position) of the rear portion of the cutting deck 120 above the surface to be mowed (e.g., the ground).

The control rod 162 includes a first end 162a that is pivotably mounted on the crossbar 176. The first end 162a of the control rod 162 is pivotally mounted on (e.g., secured to) a bracket 161, and the bracket 161 is fixed to the crossbar 176. Additionally or alternatively, the bracket 161 extends from the crossbar 176 to the first end 162a of the control rod 162 such that the first end 162a is offset from the crossbar 176 (and/or the longitudinal center axis of the crossbar 176) by a predetermined length. The control rod 162 extends forwardly from the bracket 161 (and/or the crossbar 176) to the rear adjustment plate 156, where the first projection 164 of the control rod 162 is slidably received in the slot 158 and the second projection 166 of the control rod 162 is received in a corresponding one of the plurality of apertures 160. The first projection 164 may be moved within the slot 158. Further, in embodiments, in response to the first projection 164 being slid within the slot from a first position (e.g., adjacent to the first end 158a) to a second position (e.g., in the middle of the slot 158 or adjacent to the second end 158b), the control rod 162 rotates the crossbar 176 to vertically adjust (e.g., up or down relative to the ground) a portion of the cutting deck 120 (e.g., a rear portion of the cutting deck 120).

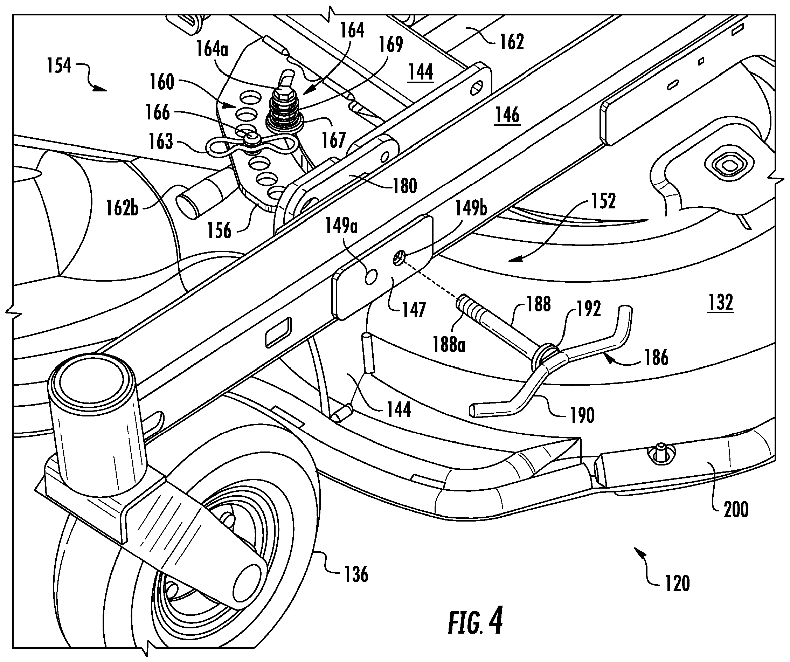

As shown in Figure 4, the control rod 162 is disposed adjacent to a bottom surface of the rear adjustment plate 156 so that the first projection 164 and the second projection 166 extend upwardly through the rear adjustment plate 156. In embodiments, the first projection 164 of the control rod 162 is a threaded bolt with a head 164a and a threaded stem, where the threaded stem passes downwardly through a coil spring 169, a washer 167, and the slot 158 before threadably engaging the control rod 162. The outer diameter of the first projection's head 164a is greater than the outer diameter of the coil spring 169 so that the head 164a cannot pass through the coil spring 169. As such, the first projection 164 of the control rod 162 is maintained in the slot 158 at all times when operating the rear height adjustment assembly 154. The configuration of the coil spring 169 between the head 164a of the first projection 164 and the second washer 167 biases the control rod 162 upwardly relative to the rear adjustment plate 156 such that the second projection 166 of the control rod 162 is maintained in the desired aperture 160 unless the operator is exerting downward force on the control rod 162. The upward biasing forces of the coil spring 169 on the control rod 162 reduces the vibration of the control rod 162 relative to the rear adjustment plate 156, thereby reducing both noise and wear on the components during mowing operations. As well, a cotter pin 163 may engage a corresponding groove on the second projection 166 to prevent it from inadvertently passing through the desired aperture 160.

As shown in Figures 2A and 2B, the distal ends 176a of the crossbar 176 are each rotatably mounted on the cutting deck 120 by a bracket 175 that also secures the first ends 146a of the support arms 146 to the cutting deck 120. As such, the crossbar 176 is free to rotate about its longitudinal center axis relative to the cutting deck 120. The crossbar 176 is pivotably suspended from the lifting arms 135 of the cutting deck mounting assembly 134 by a pair of linkage assemblies 168 as best seen in Figure 3. As shown, each linkage assembly 168 includes a bracket 170 that is non-rotatably mounted on (e.g., fixed to) the crossbar 176, a vertical link 172 that extends upwardly from the bracket 170, and a horizontal member 174 that pivotably secures each bracket 170 to a corresponding vertical link 172. A lock pin 181 is slidably received through both the top portion of a corresponding vertical link 172 and a pin bore 183 disposed on the corresponding lifting arm 135, thereby pivotably securing each vertical link 172 to the corresponding lifting arm 135. In embodiments, each lock pin 181 is maintained in the corresponding pin bore 183 by a cotter pin 185. As such, as the crossbar 176 rotates about its longitudinal center axis, the linkage assemblies 168 translate the rotational motion of the crossbar 176 into vertical displacement of the rear portion of the cutting deck 120. More specifically, when viewing the crossbar 176 from the left hand side of the cutting deck 120, rotation of the crossbar 176 in a first, clockwise (CW), direction causes the rear portion of the cutting deck 120 to be raised relative to the lifting arms 135, whereas rotation of the crossbar 176 in a second, counterclockwise (CCW), direction causes the rear portion of the cutting deck 120 to be lowered relative to the lifting arms 135. In embodiments, the control rod 162 moving relative to the frame 144 causes the first end 162a of the control rod 162 to pivot around the crossbar 176 via the bracket 161, thereby rotating the crossbar 176.

As best seen in Figure 3, a second end 162b of the control rod 162 extends radially outwardly beyond the forward edge of the rear adjustment plate 156 so that it may be grasped by the operator. In the exemplary embodiment shown, the rear height adjustment assembly 154 allows for seven different cutting height settings for the rear portion of the cutting deck 120, with the first cutting height (1) corresponding to the first end 158a of the slot 158 and the seventh cutting height (7) corresponding to the second end 158b of the slot 158. As shown in Figure 3, the second projection 166 of the control rod 162 is received in the middle aperture 160, which corresponds to the fourth cutting height (4). In order to raise the rear portion of the cutting deck 120 from this initial setting, the operator pushes the second end 162b of the control rod 162 downwardly until the second projection 166 is removed from the corresponding aperture 160, and pivots the second end 162b of the control rod 162 in the clockwise direction, when viewed from above, so that the first projection 164 of the control rod 162 slides along the slot 158 toward its second end 158b. In so doing, interaction of the first projection 164 of the control rod 162 with the slot 158 causes the control rod 162 to move rearwardly with respect to the longitudinal center axis of the cutting deck 120. Rearward linear motion of the control rod 162 is translated into rotational movement of the crossbar 176 in the clockwise direction about its longitudinal axis when viewed from the left hand side of the lawn mower 100, which is in turn translated into upward vertical motion of the rear portion of the cutting deck 120 by the linkage assemblies 168, as discussed above. Said differently, moving the first projection 164 from the first end 158a of the slot 158 towards the second end 158b of the slot 158 moves the rear portion of the cutting deck 120 from a first vertical position to a second vertical position that is higher than the first vertical position. Upon reaching the desired height setting, such as height setting (7), which corresponds to the highest cutting setting of the rear portion of the cutting deck 120, the operator aligns the second projection 166 of the control rod 162 with the corresponding aperture 160 and releases the downward force on the second end 162b of the control rod 162. As such, the upward biasing force of the spring 169 on the control rod 162 causes the second projection 166 to seat in the corresponding aperture 160.

Conversely, in order to lower the rear portion of the cutting deck 120 from an initial setting, the operator pushes the second end 162b of the control rod 162 downwardly until the second projection 166 is removed from the corresponding aperture 160, and pivots the second end 162b of the control rod 162 in the counter-clockwise direction when viewed from above, so that the first projection 164 of the control rod 162 slides along the slot 158 towards its first end 158a. In so doing, interaction of the first projection 164 of the control rod 162 with the slot 158 causes the control rod 162 to move forwardly with respect to the longitudinal center axis of the cutting deck 120. Forward linear motion of the control rod 162 is translated into rotational movement of the crossbar 176 in the counter-clockwise direction about its longitudinal axis when viewed from the left hand side of the lawn mower 100, which is in turn translated into downward vertical motion of the rear portion of the cutting deck 120 by the linkage assemblies 168, as discussed above. Upon reaching the desired height setting, such as height setting (1), which corresponds to the lowest cutting setting of the rear portion of the cutting deck 120, the operator aligns the second projection 166 of the control rod 162 with the corresponding aperture 160 and releases the downward force on the second end 162b of the control rod 162. As such, the upward biasing force of the spring 169 on the control rod 162 causes the second projection 166 to seat in the corresponding aperture 160.

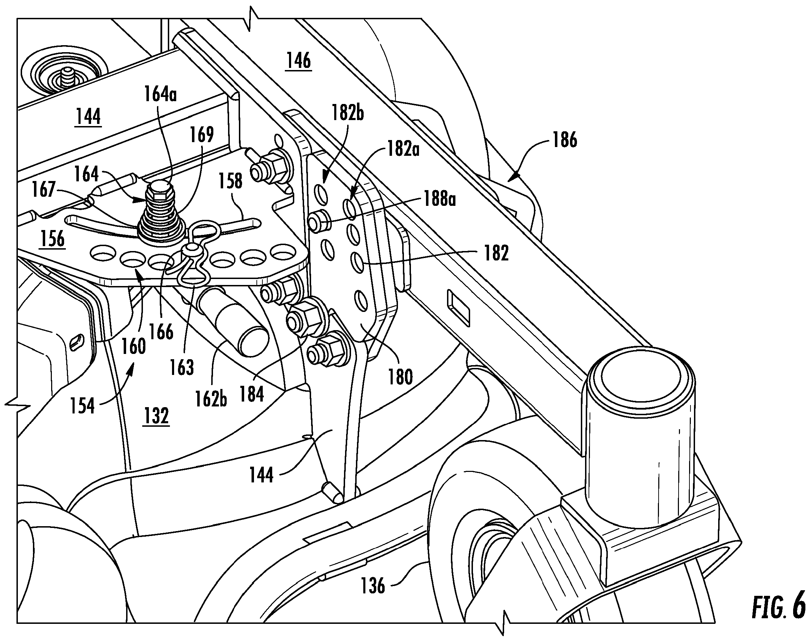

Referring additionally to Figures 4 through 6, the front height adjustment assembly 152 of the cutting deck height adjustment assembly includes a pair of front adjustment plates 180 (Figure 6) and a pair of clamping bolts 186, one each corresponding to one of the pair of support arms 146. For ease of description, only one side of the front height adjustment assembly 152 is discussed at present, that being the left hand side. Similar to the rear adjustment plate 156 of the rear height adjustment assembly 154, the adjustment plate 180 of the front height adjustment assembly 152 is mounted on (e.g., secured in a fixed position on) the blade housing 132 of the cutting deck 120 by the frame 144. However, whereas the rear adjustment plate 156 is disposed horizontally with respect to and/or generally parallel to the blade housing 132 of the cutting deck 120, the front adjustment plate 180 is generally perpendicular to and/or vertically disposed with respect to the blade housing 132. As shown, the front adjustment plate 180 defines a plurality of apertures 182, each aperture 182 corresponding to a corresponding cutting height of the front portion of the cutting deck 120. In keeping with the rear adjustment plate 156 of the rear height adjustment assembly 154, the front adjustment plate 180 also defines seven apertures 182 that correspond to seven different cutting heights. In embodiments, the apertures 182 are correspondingly threaded to a threaded shank portion of the clamping bolt 186, as discussed in greater detail below, and arranged in a first column 182a and a second column 182b. In embodiments, the front adjustment plate 180 is removably mounted on (e.g., secured to) the frame 144 of the cutting deck 120 by threaded fasteners 184. As such, varying front height adjustment plates may be utilized that include apertures of differing vertical spacing which correspond to different cutting heights.

As best seen in Figure 4, the clamping bolt 186 includes a shank portion 188 with a handle portion 190 fixed to its proximal end. A distal end 188a of the shank portion 188 is correspondingly threaded to the threaded apertures 182 of the front adjustment plate 180. Additionally, the clamping bolt 186 includes a spring washer 192 that is disposed adjacent to a handle portion 190 on the proximal end of the shank portion 188. The shank portion 188 of the clamping bolt 186 is configured to be slidably received in either of a first through bore 149a and a second through bore 149b that are defined in the support arm 146. First and second through bores 149a and 149b are disposed on the support arm 146 such that the first through bore 149a is axially alignable with each threaded aperture 182 of the first column 182a, whereas the second threaded bore 149b is axially alignable with each threaded aperture 182 of the second column 182b. The staggering of the threaded apertures 182 into the first column 182a and the second column 182b allows larger diameter threaded apertures 182 and, therefore, a larger diameter shank portion 188 of the clamping bolt 186 to be used, as opposed to a plurality of apertures that are all vertically aligned. As such, the overall strength and durability of the front height adjustment assembly 152 is improved. Additionally, in embodiments, reinforcement plates 147 are mounted on (e.g., fixed to) opposing sides of the support arm 146 in the vicinity of the first and second through bores 149a and 149b to improve durability.

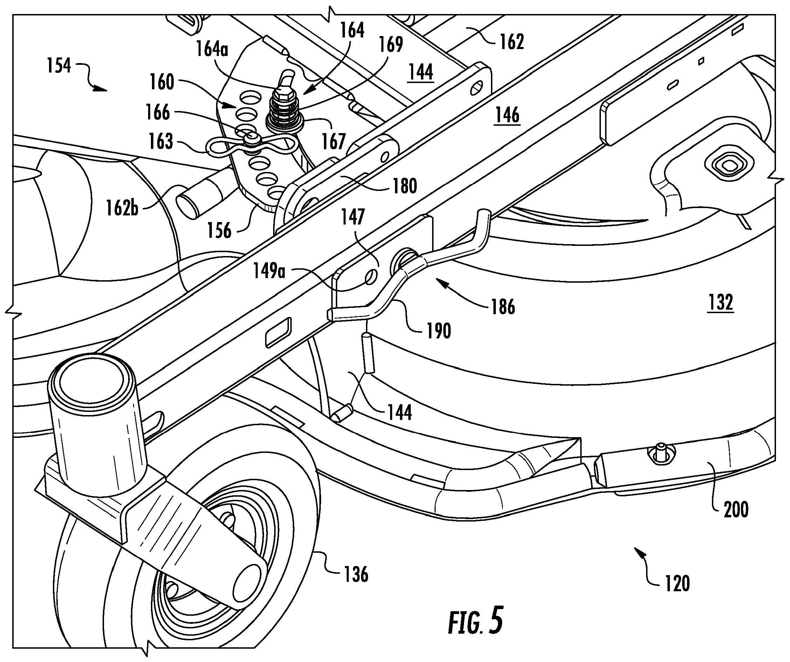

Referring to Figures 5 and 6, the front height adjustment assembly 152 is configured such that the front portion of the cutting deck 120 is at its intermediate cutting height, which corresponds to threaded aperture (4). To raise the front portion of the cutting deck 120 to a higher cutting height, the operator rotates the clamping bolt 186 until the distal end 188a of the shank portion 188 is no longer threadedly engaged with the corresponding threaded aperture 182. Once disengaged, the shank portion 188 may be slidably removed from the first through bore 149b. With the clamping bolt 186 removed, as shown in Figure 4, the operator lifts upwardly on the blade housing 132 of the cutting deck 120 until the desired threaded aperture 182 of either the first column 182a or the second column 182b is aligned with either the first through bore 149a or the second through bore 149b, respectively. For example, the operator lifts upwardly on the blade housing 132 until the first through bore 149a of the support arm 146 is axially aligned with the threaded aperture of the first column 182a that is designated with the numeral (7). Once aligned, the shank portion 188 of the clamping bolt 186 is passed through the first through bore 149a until its distal end 188a engages the corresponding threaded aperture 182. The operator then utilizes the handle portion 190 to rotate the clamping bolt 186 so that the distal end 188a of the shank portion 188 threadedly engages the corresponding threaded aperture 182. The operator rotates the clamping bolt 186 at least until the spring washer 192 comes into contact with the outer surface of the support arm 146 that is disposed around the second through bore 149a. As such, the spring washer 192 exerts an outwardly directed biasing force on the clamping bolt 186 that assists in reducing vibration of the various components of the front height adjustment assembly 152 during mowing operations.

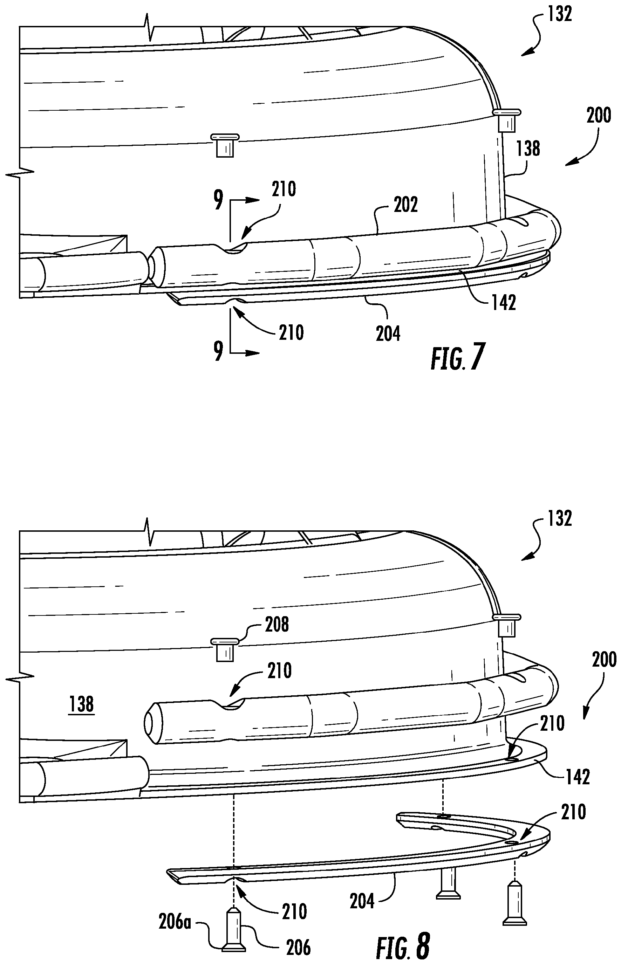

As shown in Figures 2A and 2B, in addition to the cutting deck height adjustment assembly 150, the cutting deck 120 may include one or more wear plate assemblies 200. Referring additionally to Figures 7 through 9, each wear plate assembly 200 is removably mounted on (e.g., secured to) a corresponding portion of the blade housing 132 of the cutting deck 120 that is likely to come into contact with objects such as, but not limited to, rocks, curbs, tree stumps, etc., during mowing operations. In the exemplary embodiment shown, the wear plate assembly 200 includes an upper plate 202 and a lower plate 204 that are removably mounted on (e.g., secured to) the blade housing 132 by a plurality of threaded fasteners 206. More specifically, the wear plate assembly 200 is removably mounted on (e.g., secured to) the lip 142 that extends outwardly from the bottommost portion of the side wall 138 of the blade housing 132.

As best seen in Figure 9, the upper plate 202 of the wear plate assembly 200 is mounted on (e.g., secured to) an upper surface of lip 142, whereas the lower plate 204 of the wear plate assembly 200 is mounted on (e.g., secured to) a bottom surface of the lip 142 directly opposite the upper plate 202. As shown, the upper plate 202 and the lower plate 204 are removably secured thereon by a plurality of threaded fasteners 206, each threaded fastener 206 extending upwardly through corresponding apertures 210 formed in the upper plate 202, the lower plate 204, and the lip 142 of the blade housing 132. In embodiments, each aperture 210 formed in the upper plate 202 and the lower plate 204 is countersunk such that a head 206a of each threaded fastener and a corresponding threaded nut 208 do not project outwardly beyond the uppermost and bottommost surfaces of the upper plate 202 and the lower plate 204, respectively. As well, each wear plate assembly 200 is mounted to a corresponding portion of the lip 142 of the blade housing 132 such that an outermost edge of the upper plate 202 and an outermost edge of the lower plate 204 extend radially outwardly beyond an outermost edge of the lip 142. As such, the upper plate 202 and the lower plate 204 make contact with obstructions during mowing operations rather than the lip 142 of the blade housing 132. In embodiments, the upper plate 202 and the lower plate 204 are constructed of metal, such as steel, nylon, glass-reinforced polymers, resins, etc. In that each wear plate assembly 200 is removably secured to the blade housing 132 of the cutting deck 120, they may be replaced as necessary due to wear.
Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims.

## Claims

1. A cutting deck (120) with a height adjustment assembly for a lawn mower (100), wherein the cutting deck (120) is configured to be operably coupled to the lawn mower (100) by a mounting assembly, the height adjustment assembly comprising:
a first adjustment plate (156) mounted on the cutting deck (120) and defining a slot (158) therein, wherein the slot (158) comprises a first end (158a) and a second end (158b), the first end (158a) of the slot (158) being disposed forward of the second end (158b) of the slot (158);
a crossbar (176) comprising a first end rotatably mounted on the cutting deck (120), the crossbar (176) being configured to be operably coupled to the mounting assembly;
a control rod (162) comprising a first projection extending outwardly therefrom, the first projection being slidably received in the slot (158) of the first adjustment plate (156), and a first end of the control rod (162) being pivotably mounted on the crossbar (176),
**characterized in that** in response to the first projection of the control rod (162) being slid within the slot (158) from a first position to a second position, the control rod (162) is configured to rotate the crossbar (176) thereby vertically adjusting a portion of the cutting deck (120);
wherein the first end (162a) of the control rod (162) is pivotably mounted on a bracket (161), and the bracket (161) is fixed to the crossbar (176);
wherein the crossbar (176) is pivotably suspended from lifting arms (135) of the mounting assembly (134) by a pair of linkage assemblies (168); and
wherein each linkage assembly (168) pivotably connects the crossbar (176) to the mounting assembly so that rotation of the crossbar (176) about its longitudinal center axis moves the portion of the cutting deck (120) vertically.

2. The cutting deck of claim 1, wherein the cutting deck (120) further comprises a frame (144) mounted thereon, wherein the frame (144) extends generally parallel to the cross bar (176), and wherein the first adjustment plate (156) is mounted on the frame (144).

3. The cutting deck of claim 1, wherein:
the first adjustment plate (156) further defines a plurality of apertures therein, the plurality of apertures (160) being disposed along a length of the slot (158); and
the control rod (162) further comprises a second projection being selectively positionable within at least one of the plurality of apertures (160) to maintain the control rod (160) in a fixed position relative to the first adjustment plate (156).

4. The cutting deck of claim 3, further comprising a biasing element disposed between a distal end of the first projection and the first adjustment plate to bias the second projection into a corresponding aperture (160) of the plurality of apertures (160).

5. The cutting deck of claim 1, wherein moving the first projection from the first end (158a) of the slot (158) towards the second end (158b) of the slot (158) moves the portion of the cutting deck (120) from a first vertical position to a second vertical position that is higher than the first vertical position.

6. The cutting deck of claim 1, wherein the cutting deck (120) further comprises a first support arm (146) comprising a first end and a second end, wherein the first end of the first support arm (146) is pivotally mounted on the cutting deck (120), and wherein a first wheel assembly (136) is mounted on the second end of the first support arm (146).

7. The cutting deck of claim 6, further comprising:
a second adjustment plate (180) mounted on the cutting deck (120), the second adjustment plate (180) defining a plurality of height apertures (182) therein;
a clamping bolt (186) comprising a shank portion (188) and a handle portion (190) secured to a proximal end of the shank portion; and
a first bolt aperture (149a) defined in the first support arm (146), the first bolt aperture (149a) being axially alignable with a corresponding one of the plurality of height apertures (182) so that a distal end of the shank portion (188) of the clamping bolt (186) is positionable in the corresponding height aperture (182) when the shank portion is slidably received by the first bolt aperture (149a), thereby maintaining the second adjustment plate (180) in a fixed vertical position relative to the first support arm (146).

8. The cutting deck of claim 7, wherein:
the first support arm (146) further comprises a second bolt aperture (149b) that is displaced from the first bolt aperture (149a) along a longitudinal center axis of the first support arm (146);
the plurality of height apertures (182) further comprises a first column of height apertures (182a) and a second column of height apertures (182b); and
the first bolt aperture (149a) is selectively alignable with the first column of height apertures (182a), and the second bolt aperture (149b) is selectively alignable with the second column of height apertures (182b).

9. The cutting deck of claim 8, wherein each height aperture of the first column of height apertures (182a) is vertically offset from each height aperture of the second column of height apertures (182b).

10. The cutting deck of claim 8, wherein the plurality of height apertures(182) and the distal end of the shank portion (188) of the clamping bolt (186) are correspondingly threaded, and the second adjustment plate (180) is removably mounted on the cutting deck (120).

11. The cutting deck of claim 7, wherein the clamping bolt (186) further comprises a biasing element disposed at the proximal end of the shank portion (188) so that the biasing element is disposed between the handle portion (190) and the first support arm (146) when the clamping bolt (186) is received in the first bolt aperture (149a) and the corresponding one of the plurality of height apertures (182).

12. The cutting deck of claim 1, wherein the cutting deck (120) further comprises a shell comprising a top wall (140) and a side wall (138) extending downwardly therefrom, and wherein a wear plate (200) is removably secured to a distal end of the side wall,
wherein the wear plate (200) further comprises a first wear plate portion (202) and a second wear plate portion (204), the first wear plate portion (202) being secured to a first side of the shell and the second wear plate portion (204) being secured to a second side of the shell opposite the first wear plate portion (202), and
wherein the first wear plate portion (202) and the second wear plate portion (204) are secured to the shell of the cutting deck (120) by at least one threaded fastener (206), and wherein the distal end of the side wall (138) of the shell of the cutting deck (120) further comprises a substantially horizontally extending lip (142).

13. The cutting deck of claim 1, wherein:
the cutting deck (120) is a front-mounted cutting deck configured to be operably coupled to the lawn mower (100) forward of a front wheel of the lawn mower,
the slot (158) of the first adjustment plate (156) is curved between the first end (158a) of the slot and the second end (158b) of the slot, and
the portion of the cutting deck (120) being vertically adjusted is a rear portion of the cutting deck (120), the first position is adjacent to the first end (158a) of the slot (158), and the second position is adjacent to the second end (158b) of the slot (158).

14. A lawn mower comprising the cutting deck of any of claims 1-13.

## Patentansprüche

1. Mähwerk (120) mit einer Höheneinstellanordnung für einen Rasenmäher (100), wobei das Mähwerk (120) so eingerichtet ist, dass es durch eine Montageanordnung betriebsfähig mit dem Rasenmäher (100) gekoppelt ist, wobei die Höheneinstellanordnung umfasst:
eine erste Einstellplatte (156), die auf dem Mähwerk (120) montiert ist und einen Schlitz (158) darin definiert, wobei der Schlitz (158) ein erstes Ende (158a) und ein zweites Ende (158b) aufweist, wobei das erste Ende (158a) des Schlitzes (158) vor dem zweiten Ende (158b) des Schlitzes (158) angeordnet ist;
eine Querstange (176), die ein erstes Ende aufweist, das drehbar am Mähwerk (120) montiert ist, wobei die Querstange (176) dazu eingerichtet ist, betriebsfähig mit der Montageanordnung gekoppelt zu werden;
eine Steuerstange (162), die einen ersten Vorsprung aufweist, der sich von ihr nach außen erstreckt, wobei der erste Vorsprung verschiebbar in dem Schlitz (158) der ersten Einstellplatte (156) aufgenommen ist, und ein erstes Ende der Steuerstange (162) schwenkbar an der Querstange (176) montiert ist,
**dadurch gekennzeichnet, dass**
als Reaktion darauf, dass der erste Vorsprung der Steuerstange (162) innerhalb des Schlitzes (158) aus einer ersten Position in eine zweite Position geschoben wird, die Steuerstange (162) dazu eingerichtet ist, die Querstange (176) zu drehen, wodurch ein Abschnitt des Mähwerks (120) vertikal eingestellt wird;
wobei das erste Ende (162a) der Steuerstange (162) schwenkbar an einer Halterung (161) montiert ist, und die Halterung (161) an der Querstange (176) befestigt ist;
wobei die Querstange (176) schwenkbar an den Hubarmen (135) der Montageanordnung (134) durch ein Paar Gestängeanordnungen aufgehängt ist,
wobei jede Gestängeanordnung (168) die Querstange (176) schwenkbar mit der Montageanordnung verbindet, sodass eine Drehung der Querstange (176) um ihre Längsmittelachse den Abschnitt des Mähwerks (120) vertikal bewegt.

2. Mähwerk gemäß Anspruch 1, wobei das Mähwerk (120) ferner einen darauf montierten Rahmen (144) umfasst, wobei sich der Rahmen (144) im Allgemeinen parallel zur Querstange (176) erstreckt und wobei die erste Einstellplatte (156) auf dem Rahmen (144) montiert ist.

3. Mähwerk gemäß Anspruch 1, wobei:
die erste Einstellplatte (156) ferner eine Vielzahl von Öffnungen darin definiert, wobei die Vielzahl von Öffnungen (160) entlang einer Länge des Schlitzes (158) angeordnet ist; und
die Steuerstange (162) ferner einen zweiten Vorsprung umfasst, der selektiv innerhalb mindestens einer der Vielzahl von Öffnungen (160) positionierbar ist, um die Steuerstange (160) in einer festen Position relativ zur ersten Einstellplatte (156) zu halten.

4. Mähwerk gemäß Anspruch 3, ferner umfassend ein Vorspannelement, das zwischen einem fern gelegenen Ende des ersten Vorsprungs und der ersten Einstellplatte angeordnet ist, um den zweiten Vorsprung in eine entsprechende Öffnung (160) der Vielzahl von Öffnungen (160) vorzuspannen.

5. Mähwerk gemäß Anspruch 1, wobei das Bewegen des ersten Vorsprungs vom ersten Ende (158a) des Schlitzes (158) zum zweiten Ende (158b) des Schlitzes (158) den Abschnitt des Mähwerks (120) von einer ersten vertikalen Position zu einer zweiten vertikalen Position, die höher als die erste vertikale Position ist, bewegt.

6. Mähwerk gemäß Anspruch 1, wobei das Mähwerk (120) ferner einen ersten Tragarm (146) umfasst, der ein erstes Ende und ein zweites Ende aufweist, wobei das erste Ende des ersten Tragarms (146) schwenkbar am Mähwerk (120) montiert ist, und wobei eine erste Radanordnung (136) am zweiten Ende des ersten Tragarms (146) montiert ist.

7. Mähwerk gemäß Anspruch 6, ferner umfassend:
eine zweite Einstellplatte (180), die auf dem Mähwerk (120) montiert ist, wobei die zweite Einstellplatte (180) eine Vielzahl von Höhenöffnungen (182) darin definiert;
einen Klemmbolzen (186), der einen Schaftabschnitt (188) und einen an einem nahe gelegenen Ende des Schaftabschnitts befestigten Griffabschnitt (190) umfasst; und eine erste Bolzenöffnung (149a), die in dem ersten Tragarm (146) definiert ist, wobei die erste Bolzenöffnung (149a) axial mit einer entsprechenden aus der Vielzahl von Höhenöffnungen (182) ausrichtbar ist, sodass ein fern gelegenes Ende des Schaftabschnitts (188) des Klemmbolzens (186) in der entsprechenden Höhenöffnung (182) positionierbar ist, wenn der Schaftabschnitt gleitend durch die erste Bolzenöffnung (149a) aufgenommen wird, wodurch die zweite Einstellplatte (180) in einer festen vertikalen Position relativ zum ersten Tragarm (146) gehalten wird.

8. Mähwerk gemäß Anspruch 7, wobei:
der erste Tragarm (146) ferner eine zweite Bolzenöffnung (149b) umfasst, die von der ersten Bolzenöffnung (149a) entlang einer Längsmittelachse des ersten Tragarms (146) versetzt ist;
die Vielzahl von Höhenöffnungen (182) ferner eine erste Spalte von Höhenöffnungen (182a) und eine zweite Spalte von Höhenöffnungen (182b) umfasst; und
die erste Bolzenöffnung (149a) selektiv mit der ersten Spalte von Höhenöffnungen (182a) ausrichtbar ist und die zweite Bolzenöffnung (149b) selektiv mit der zweiten Spalte von Höhenöffnungen (182b) ausrichtbar ist.

9. Mähwerk gemäß Anspruch 8, wobei jede Höhenöffnung der ersten Spalte von Höhenöffnungen (182a) vertikal von jeder Höhenöffnung der zweiten Spalte von Höhenöffnungen (182b) versetzt ist.

10. Mähwerk gemäß Anspruch 8, wobei die Vielzahl von Höhenöffnungen (182) und das fern gelegene Ende des Schaftabschnitts (188) des Klemmbolzens (186) entsprechend mit einem Gewinde versehen sind und die zweite Einstellplatte (180) abnehmbar auf dem Mähwerk (120) montiert ist.

11. Mähwerk gemäß Anspruch 7, wobei der Klemmbolzen (186) ferner ein Vorspannelement umfasst, das am nahe gelegenen Ende des Schaftabschnitts (188) angeordnet ist, sodass das Vorspannelement zwischen dem Griffabschnitt (190) und dem ersten Tragarm (146) angeordnet ist, wenn der Klemmbolzen (186) in der ersten Bolzenöffnung (149a) und der entsprechenden aus der Vielzahl der Höhenöffnungen (182) aufgenommen ist.

12. Mähwerk gemäß Anspruch 1, wobei das Mähwerk (120) ferner ein Gehäuse umfasst, das eine obere Wand (140) und eine sich von dieser nach unten erstreckende Seitenwand (138) umfasst, und wobei eine Verschleißplatte (200) an einem fern gelegenen Ende der Seitenwand abnehmbar befestigt ist,
wobei die Verschleißplatte (200) ferner einen ersten Verschleißplattenabschnitt (202) und einen zweiten Verschleißplattenabschnitt (204) umfasst, wobei der erste Verschleißplattenabschnitt (202) an einer ersten Seite des Gehäuses befestigt ist und der zweite Verschleißplattenabschnitt (204) an einer zweiten Seite des Gehäuses gegenüber dem ersten Verschleißplattenabschnitt (202) befestigt ist, und
wobei der erste Verschleißplattenabschnitt (202) und der zweite Verschleißplattenabschnitt (204) am Gehäuse des Mähwerks (120) durch mindestens ein mit einem Gewinde versehenes Befestigungselement (206) befestigt sind, und wobei das fern gelegene Ende der Seitenwand (138) des Gehäuses des Mähwerks (120) ferner eine sich im Wesentlichen horizontal erstreckende Lippe (142) umfasst.

13. Mähwerk gemäß Anspruch 1, wobei:
das Mähwerk (120) ein frontmontiertes Mähwerk ist, das dazu eingerichtet ist, betriebsfähig mit dem Rasenmäher (100) vor einem Vorderrad des Rasenmähers gekoppelt zu werden,
der Schlitz (158) der ersten Einstellplatte (156) zwischen dem ersten Ende (158a) des Schlitzes und dem zweiten Ende (158b) des Schlitzes gebogen ist, und
der Abschnitt des Mähwerks (120), der vertikal eingestellt wird, ein hinterer Abschnitt des Mähwerks (120) ist, die erste Position an das erste Ende (158a) des Schlitzes (158) angrenzt, und die zweite Position an das zweite Ende (158b) des Schlitzes (158) angrenzt.

14. Rasenmäher, umfassend das Mähwerk gemäß einem der Ansprüche 1-13.

## Revendications

1. Plateau de coupe (120) comportant un ensemble de réglage de hauteur pour une tondeuse à gazon (100), le plateau de coupe (120) étant conçu pour être accouplé de manière fonctionnelle avec la tondeuse à gazon (100) par le biais d'un ensemble de fixation, l'ensemble de réglage de hauteur comprenant :
une première plaque de réglage (156) fixée sur le plateau de coupe (120) et définissant une fente (158) dans celle-ci, la fente (158) comprenant une première extrémité (158a) et une seconde extrémité (158b), la première extrémité (158a) de la fente (158) étant disposée en avant de la seconde extrémité (158b) de la fente (158) ;
une barre transversale (176) comprenant une première extrémité fixée à rotation sur le plateau de coupe (120), la barre transversale (176) étant conçue pour être accouplée de manière fonctionnelle avec l'ensemble de fixation ;
une tige de commande (162) comprenant une première saillie s'étendant vers l'extérieur à partir de celle-ci, la première saillie étant reçue à coulissement dans la fente (158) de la première plaque de réglage (156), et une première extrémité de la tige de commande (162) étant fixée à pivotement sur la barre transversale (176),
**caractérisé en ce que**,
en réponse au coulissement de la première saillie de la tige de commande (162) à l'intérieur de la fente (158) d'une première position à une seconde position, la tige de commande (162) est conçue pour imprimer une rotation à la barre transversale (176), de façon à régler ainsi verticalement une partie du plateau de coupe (120) ;
la première extrémité (162a) de la tige de commande (162) étant fixée à pivotement sur un support (161), et le support (161) étant attaché à la barre transversale (176) ;
la barre transversale (176) étant suspendue à pivotement à des bras de levage (135) de l'ensemble de fixation (134) par une paire d'ensembles de liaison (168) ; et
chaque ensemble de liaison (168) reliant à pivotement la barre transversale (176) à l'ensemble de fixation de telle sorte que la rotation de la barre transversale (176) autour de son axe médian longitudinal déplace la partie du plateau de coupe (120) verticalement.

2. Plateau de coupe selon la revendication 1, le plateau de coupe (120) comprenant en outre un bâti (144) fixé sur celui-ci, le bâti (144) s'étendant de manière globalement parallèle à la barre transversale (176), et la première plaque de réglage (156) étant fixée sur le bâti (144).

3. Plateau de coupe selon la revendication 1, dans lequel :
la première plaque de réglage (156) définit en outre une pluralité d'ouvertures dans celle-ci, la pluralité d'ouvertures (160) étant disposées le long d'une longueur de la fente (158) ; et
la tige de commande (162) comprend en outre une seconde saillie pouvant être positionnée sélectivement à l'intérieur d'au moins une de la pluralité d'ouvertures (160) afin de maintenir la tige de commande (160) dans une position fixe par rapport à la première plaque de réglage (156).

4. Plateau de coupe selon la revendication 3, comprenant en outre un élément de sollicitation disposé entre une extrémité distale de la première saillie et la première plaque de réglage afin de solliciter la seconde saillie de sorte qu'elle pénètre dans une ouverture correspondante (160) de la pluralité d'ouvertures (160).

5. Plateau de coupe selon la revendication 1, dans lequel le déplacement de la première saillie de la première extrémité (158a) de la fente (158) en direction de la seconde extrémité (158b) de la fente (158) déplace la partie du plateau de coupe (120) d'une première position verticale à une seconde position verticale qui est située plus haut que la première position verticale.

6. Plateau de coupe selon la revendication 1, le plateau de coupe (120) comprenant en outre un premier bras de support (146) comprenant une première extrémité et une seconde extrémité, la première extrémité du premier bras de support (146) étant fixée à pivotement sur le plateau de coupe (120), et un premier ensemble roue (136) étant fixé sur la seconde extrémité du premier bras de support (146).

7. Plateau de coupe selon la revendication 6, comprenant en outre :
une seconde plaque de réglage (180) fixée sur le plateau de coupe (120), la seconde plaque de réglage (180) définissant une pluralité d'ouvertures de hauteur (182) dans celle-ci ;
une vis de serrage (186) comprenant une partie queue (188) et une partie poignée (190) assujettie à une extrémité proximale de la partie queue ; et
une première ouverture à vis (149a) définie dans le premier bras de support (146), la première ouverture à vis (149a) pouvant être alignée axialement avec une ouverture correspondante parmi la pluralité d'ouvertures de hauteur (182) de telle sorte qu'une extrémité distale de la partie queue (188) de la vis de serrage (186) puisse être positionnée dans l'ouverture de hauteur correspondante (182) lorsque la partie queue est reçue de manière coulissante par la première ouverture à vis (149a), de façon à maintenir ainsi la seconde plaque de réglage (180) dans une position verticale fixe par rapport au premier bras de support (146).

8. Plateau de coupe selon la revendication 7, dans lequel :
le premier bras de support (146) comprend en outre une seconde ouverture à vis (149b) qui est décalée vis-à-vis de la première ouverture à vis (149a) le long d'un axe médian longitudinal du premier bras de support (146) ;
la pluralité d'ouvertures de hauteur (182) comprend en outre une première colonne d'ouvertures de hauteur (182a) et une seconde colonne d'ouvertures de hauteur (182b) ; et
la première ouverture à vis (149a) peut être alignée de manière sélective avec la première colonne d'ouvertures de hauteur (182a), et la seconde ouverture à vis (149b) peut être alignée de manière sélective avec la seconde colonne d'ouvertures de hauteur (182b).

9. Plateau de coupe selon la revendication 8, dans lequel chaque ouverture de hauteur de la première colonne d'ouvertures de hauteur (182a) est décalée verticalement vis-à-vis de chaque ouverture de hauteur de la seconde colonne d'ouvertures de hauteur (182b).

10. Plateau de coupe selon la revendication 8, dans lequel la pluralité d'ouvertures de hauteur (182) et l'extrémité distale de la partie queue (188) de la vis de serrage (186) sont filetées de manière correspondante, et la seconde plaque de réglage (180) est fixée de manière amovible sur le plateau de coupe (120).

11. Plateau de coupe selon la revendication 7, dans lequel la vis de serrage (186) comprend en outre un élément de sollicitation disposé au niveau de l'extrémité proximale de la partie queue (188) de telle sorte que l'élément de sollicitation est disposé entre la partie poignée (190) et le premier bras de support (146) lorsque la vis de serrage (186) est reçue dans la première ouverture à vis (149a) et l'ouverture correspondante parmi la pluralité d'ouvertures de hauteur (182).

12. Plateau de coupe selon la revendication 1, le plateau de coupe (120) comprenant en outre une coque comprenant une paroi supérieure (140) et une paroi latérale (138) s'étendant vers le bas à partir de celle-ci, et une plaque d'usure (200) étant assujettie de manière amovible à une extrémité distale de la paroi latérale,
la plaque d'usure (200) comprenant en outre une première partie de plaque d'usure (202) et une seconde partie de plaque d'usure (204), la première partie de plaque d'usure (202) étant assujettie à un premier côté de la coque et la seconde partie de plaque d'usure (204) étant assujettie à un second côté de la coque à l'opposé de la première partie de plaque d'usure (202), et
la première partie de plaque d'usure (202) et la seconde partie de plaque d'usure (204) étant assujetties à la coque du plateau de coupe (120) par au moins un élément de fixation fileté (206), et l'extrémité distale de la paroi latérale (138) de la coque du plateau de coupe (120) comprenant en outre une lèvre (142) s'étendant de manière essentiellement horizontale.

13. Plateau de coupe selon la revendication 1 :
le plateau de coupe (120) étant un plateau de coupe avant conçu pour être accouplé de manière fonctionnelle avec la tondeuse à gazon (100) en avant d'une roue avant de la tondeuse à gazon,
la fente (158) de la première plaque de réglage (156) étant courbée entre la première extrémité (158a) de la fente et la seconde extrémité (158b) de la fente, et
la partie du plateau de coupe (120) qui est réglée verticalement étant une partie arrière du plateau de coupe (120), la première position étant adjacente à la première extrémité (158a) de la fente (158), et la seconde position étant adjacente à la seconde extrémité (158b) de la fente (158).

14. Tondeuse à gazon comprenant le plateau de coupe selon l'une quelconque des revendications 1 à 13.
